Europäisches Patentamt

European Patent Office

Office européen des brevets

(11) Numéro de publication : **0 461 628 B1**

## (12) FASCICULE DE BREVET EUROPEEN

(45) Date de publication du fascicule du brevet :
**20.04.94 Bulletin 94/16**

(51) Int. Cl.$^5$ : **B61K 9/08**, G01B 11/14

(21) Numéro de dépôt : **91109608.9**

(22) Date de dépôt : **12.06.91**

(54) **Véhicule sur rails pour la mesure des paramètres géométriques de voie.**

(30) Priorité : **12.06.90 FR 9007276**

(43) Date de publication de la demande :
**18.12.91 Bulletin 91/51**

(45) Mention de la délivrance du brevet :
**20.04.94 Bulletin 94/16**

(84) Etats contractants désignés :
**AT BE CH DE DK ES FR GB GR IT LI LU NL SE**

(56) Documents cités :
**CH-A- 597 027**
**DE-A- 1 916 728**

(73) Titulaire : **Société Anonyme dite: CEGELEC**
**13, rue Antonin Raynaud**
**F-92309 Levallois-Perret (FR)**
Titulaire : **ABRF INDUSTRIES**
**Z.I. Rue Lafayette**
**F-44141 CHATEAUBRIANT CEDEX (FR)**

(72) Inventeur : **Trefouel, Jean-François**
**55, avenue Jean-Jaurès**
**F-94250 Gentilly (FR)**
Inventeur : **Gentil, Marc,c/o A.B.R.F.**
**B.P. 19**
**F-44141 Chateaubriant Cedex (FR)**

(74) Mandataire : **Weinmiller, Jürgen et al**
**Lennéstrasse 9 Postfach 24**
**D-82336 Feldafing (DE)**

## Description

La présente invention est relative à un véhicule sur rails destiné à la mesure des paramètres géométriques de voie, et en particulier les paramètres suivants:

- écartement des rails de la voie, c'est-à-dire la distance qui sépare les deux flancs intérieurs des rails, dans une section droite de la voie,
- flèche ou dressage, c'est-à-dire la mesure de la distance dans un plan horizontal, entre une corde de longueur donnée (par exemple 10 mètres) et un point du rail situé à une distance donnée d'une des extrémités de la corde (par exemple 4,5 mètres d'une extrémité et 5,5 mètres de l'autre). On fait cette mesure pour chaque rail,
- dévers, c'est-à-dire la distance qui, dans une section droite de voie, sépare une horizontale posée sur un des rails de l'autre rail,
- gauche, c'est-à-dire l'écart vertical qui sépare, pour un rectangle de longueur donnée dont trois sommets s'appuient sur les rails, le quatrième sommet du rail. La longueur du rectangle est par exemple voisine de la longueur d'un bogie: on parle alors de gauche de base courte. La longueur du rectangle peut être voisine de la distance qui sépare deux bogies d'un wagon: on parle alors de gauche de base longue,
- nivellement, c'est-à-dire la différence de hauteur entre une corde de longueur donnée, par exemple 10 mètres, et un point du rail à une distance donnée des extrémités de la corde, par exemple 4,5 mètres d'une extrémité et 5,5 mètres de l'autre. On fait cette mesure sur chaque rail.

Pour une bonne sécurité des trains, les paramètres géométriques de voie doivent être compris dans des valeurs de tolérances données, d'où la nécessité de mesurer en continu chacun des paramètres.

Le cahier des charges impose des mesures en continu à l'aide d'un véhicule se déplaçant sur la voie à une vitesse au moins égale à 60 km/h, cette vitesse pouvant atteindre 160 km/h.

De telles mesures sont actuellement effectuées au moyen d'un véhicule équipé d'organes mécaniques en contact avec les rails de la voie. L'accumulation de paquets de graisse sur la voie perturbe ces mesures, de telle sorte qu'il est préférable de réaliser des mesures sans organes mécaniques en contact avec la voie.

On a proposé, notamment dans le document US-A-4040738 ou DE-A- 1916 728, d'utiliser des moyens optiques pour mesurer des paramètres de voie.

C'est ce principe qui est mis en oeuvre dans l'invention, d'une manière différente et plus complète que celle indiquée dans le document précité.

L'invention a pour objet un véhicule sur rails pour la mesure par voie optique des paramètres géométriques d'une voie comprenant un premier et un deuxième rails, le véhicule se déplaçant sur ladite voie et comprenant un premier et un second bogies ayant chacun deux essieux principaux, caractérisé en ce que chacun des premier et second bogies comprend un troisième essieu, à roues indépendantes, le véhicule comprenant en outre:

- un troisième bogie comportant deux essieux principaux pouvant effectuer l'un par rapport à l'autre des mouvements autour d'un axe passant par leurs centres et un troisième essieu, à roues indépendantes, placé entre les deux essieux précités,
- trois paires de proximètres optiques disposés respectivement sur les trois essieux à roues indépendantes, comprenant chacun un émetteur et un récepteur, et placés de manière à viser respectivement les flancs intérieurs des premier et second rails,
- une première et une deuxième paires d'écartomètres optiques dont les récepteurs sont disposés deux à deux tête-bêche aux extrémités de l'essieu central du troisième bogie et dont les émetteurs sont disposés respectivement aux extrémités des essieux à roues indépendantes des premier et deuxième bogies,
- une troisième paire d'écartomètres dont les récepteurs sont placés aux extrémités de l'un des essieux principaux du troisième bogie et dont les émetteurs sont disposés aux extrémités de l'autre essieu du troisième bogie.

Dans un premier mode de réalisation, le rayonnement émis par le proximètre solidaire d'un essieu à roues indépendantes pour la mesure de l'écartement de la voie est réfléchi en direction du rail par un miroir solidaire dudit essieu.

En variante, le rayonnement émis par le proximètre solidaire d'un essieu à roues indépendantes pour la mesure de l'écartement de la voie est réfléchi en direction du rail par au moins un miroir solidaire de la roue dudit essieu.

Avantageusement, le rayon réfléchi sur le miroir atteint le rail à travers au moins une lumière pratiquée dans le mentonnet de la roue.

Dans un mode préféré de réalisation, le véhicule comprend une partie centrale encadrée par deux parties de moindre largeur, lesdites parties étant munies de vitrages pour l'observation des repères extérieurs à la voie.

L'invention est précisée par la description détaillée d'un exemple de réalisation, en référence au dessin annexé dans lequel:

- la figure 1 est une vue en élévation d'un véhicule selon l'invention,
- la figure 2 est une vue de dessous du même véhicule,
- la figure 3 est un schéma illustrant la mesure de l'écartement de la voie,
- la figure 4 est une vue schématique illustrant le mode d'utilisation d'un proximètre pour une mesure d'écartement, selon un premier mode de réalisation,
- la figure 5 est une vue schématique illustrant le mode d'utilisation d'un proximètre pour une mesure d'écartement, selon un second mode de réalisation,
- la figure 6 est un schéma du dispositif de l'invention pour la mesure du nivellement et du dressage,
- la figure 7 est un schéma du dispositif de l'invention pour la mesure des gauches,
- la figure 8 est un schéma de définition du paramètre dévers,
- la figure 9 est un diagramme des accélérations de la masselotte d'un inclinomètre utilisé pour la mesure du paramètre dévers,
- la figure 10 est un schéma expliquant la mesure du rayon de courbure de la voie.

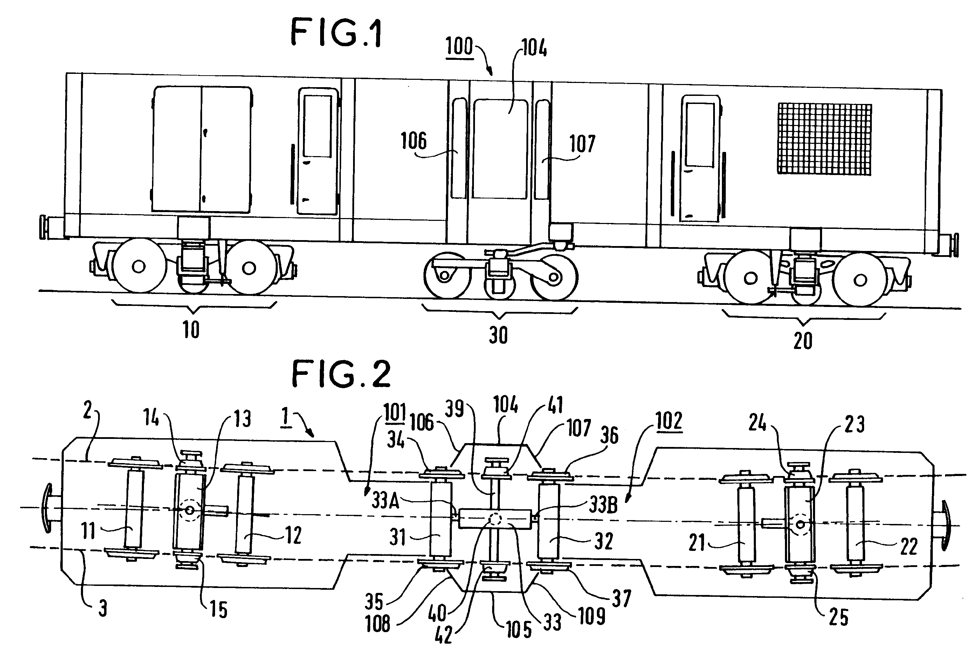

Dans les figures 1 et 2, la référence 1 désigne un véhicule sur rail selon l'invention, roulant sur les deux rails 2 et 3 d'une voie ferrée. Le véhicule est muni d'un premier bogie d'extrémité 10 et d'un second bogie d'extrémité 20, réalisés chacun de manière classique au moyen de deux essieux monoblocs à roues coniques, respectivement référencés 11 et 12, et 21 et 22 .

Selon l'invention, le véhicule comprend un troisième bogie 30, disposé entre les bogies 10 et 20, et dont les particularités seront précisées plus loin.

Les bogies 10 et 20 possèdent chacun, conformément à une caractéristique de l'invention, un troisième essieu référencé respectivement 13 et 23, muni de roues indépendantes 14, 15 et 24, 25 de diamètre de préférence inférieur à celui des autres roues des bogies. Ces essieux supplémentaires, placés entre les essieux principaux, sont de préférence escamotables de manière à quitter la voie lorsque le véhicule n'effectue pas de mesure.

Le troisième bogie 30 comprend deux essieux 31 et 32 pouvant pivoter autour d'une ligne passant par leurs centres respectifs; ils sont reliés à une traverse commune 33 par des articulations 33A et 33B convenables. On a référencé par 34 et 35 les roues de l'essieu 31, et par 36 et 37 les roues de l'essieu 32.

Le bogie 30 possède un troisième essieu 39, disposé entre les essieux 31 et 32 et articulé en 40 à la traverse 33; l'essieu 39 est muni de deux roues indépendantes 41 et 42. L'essieu 39 est de préférence escamotable.

Dans la suite, on désignera indifféremment les essieux 13, 23 et 39 sous les termes essieux à roues indépendantes ou essieux supplémentaires.

Mesure de l'écartement des rails

Cette mesure peut être réalisée en équipant un seul des essieux à roues indépendantes comme il est décrit ci-après. En pratique, on équipera les trois essieux supplémentaires 13, 23 et 39, de manière à permettre également, comme on le verra plus loin, la mesure du dressage.

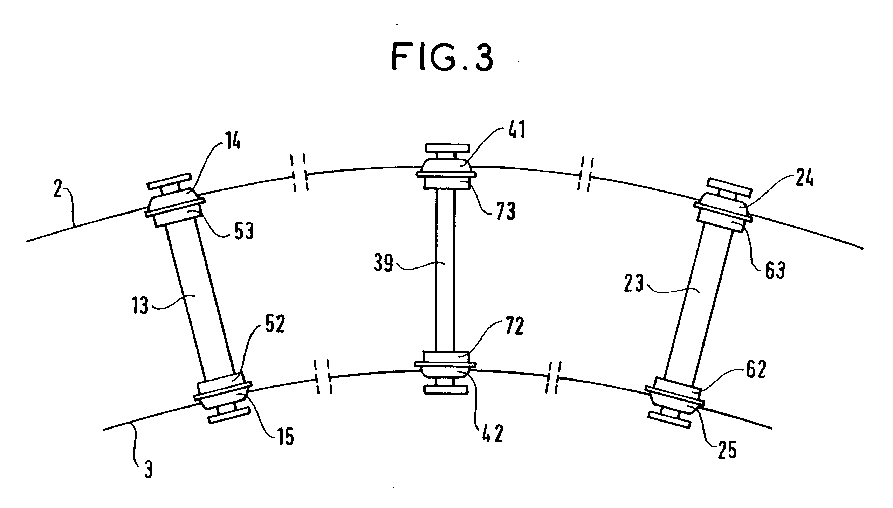

On se référera à la figure 3, dans laquelle on a seulement représenté les rails 2 et 3 et les trois essieux supplémentaires 13, 23 et 39. Chaque essieu est doté d'une paire de proximètres; on désigne par proximètre un dispositif optique comprenant une source lumineuse émettrice (appelée aussi émetteur) et un organe récepteur, comprenant par exemple des diodes réceptrices. Le rayon émis est dirigé sur un objet et s'y réfléchit; le rayon réfléchi est recueilli par le récepteur; l'appareil fournit une mesure de la distance séparant l'objet de l'appareil. Un tel proximètre est commercialisé par exemple sous la marque CAPTOLAS par la société REOM.

La figure montre que l'essieu supplémentaire 13 est muni d'un proximètre 52, disposé à une extrémité de l'essieu du côté du rail 2, et d'un proximètre 53 disposé à l'extrémité de l'essieu du côté du rail 3. Le faisceau du proximètre 52 est dirigé sur le flanc interne du rail 2 et s'y réfléchit; de même, le faisceau du proximètre 53 est dirigé sur le flanc interne du rail 3. Si on désigne par e la distance séparant le proximètre 52 du rail 2 et mesurée par le proximètre 52, par e' la distance séparant le proximètre 53 du rail 3 et mesurée par le proximètre 53, et par a la distance séparant les proximètres 52 et 53, la largeur de la voie est égale à: a + e + e'.

On a référencé par 62 et 63 les proximètres équipant l'essieu supplémentaire 23, et par 72 et 73 les proximètres équipant l'essieu 39.

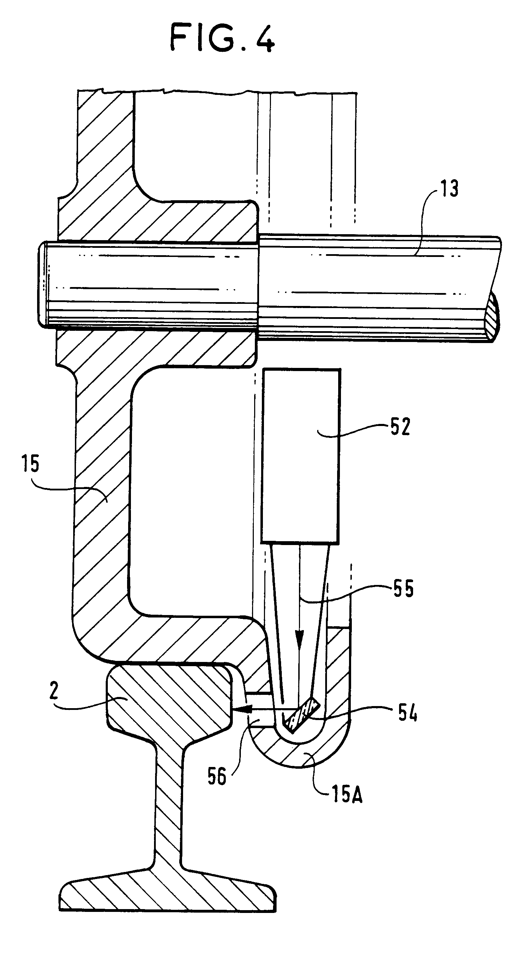

La figure 4 illustre un premier mode de réalisation dans lequel le proximètre 52, solidaire de la traverse d'essieu 13, est solidaire d'un miroir 54; ce miroir réfléchit en direction du rail 3 le faisceau lumineux 55 émis par le proximètre; le rayonnement atteint le flanc interne du rail 2 après traversée d'une lumière 56 pratiquée dans le mentonnet 15A de la roue 15. Le faisceau réfléchi suit le même chemin en sens inverse. On peut ainsi effectuer une mesure à chaque tour de roue. Si on dispose plusieurs lumières réparties de manière équidistante à la périphérie de la jante de la roue, on peut effectuer plusieurs mesures à chaque tour de roue. La disposition du miroir à l'intérieur du mentonnet permet de le protéger contre les pollutions telles que boues, humidité ou poussières et contre les chocs mécaniques.

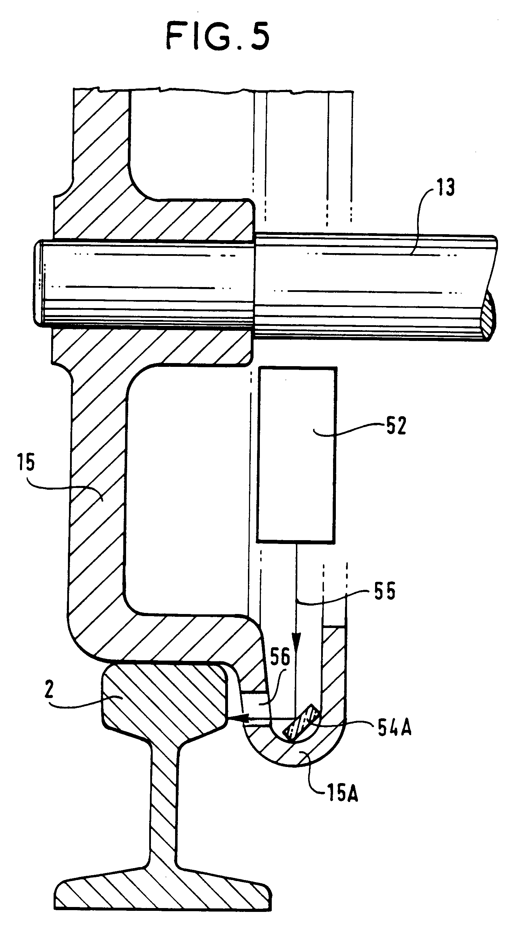

Dans la variante de réalisation représentée dans la figure 5, le proximètre 52, solidaire de la traverse d'essieu 13, est associé à au moins un miroir 54A solidaire de la roue 15; le faisceau 55 atteint le flanc interne du rail 2 après traversée d'une lumière 56 pratiquée dans le mentonnet 15A de la roue 15; le rayon réfléchi suit le même chemin en sens inverse. Avec un seul miroir, on peut réaliser une mesure par tour de roue; il est possible de disposer plusieurs miroirs avec autant de lumières pour obtenir plusieurs mesures par tour de roue.

## Mesure du nivellement et du dressage

On utilise pour cela des écartomètres. On entend par écartomètre un dispositif optique comprenant une source émettrice de lumière et un récepteur constitué notamment d'une matrice de diodes réceptrices. Un tel appareil fournit les écarts des positions horizontale et verticale relatives du récepteur et de l'émetteur, à partir d'une position de référence. Un tel écartomètre est commercialisé par exemple sous la marque SIRRAH par la société MICROMAINE.

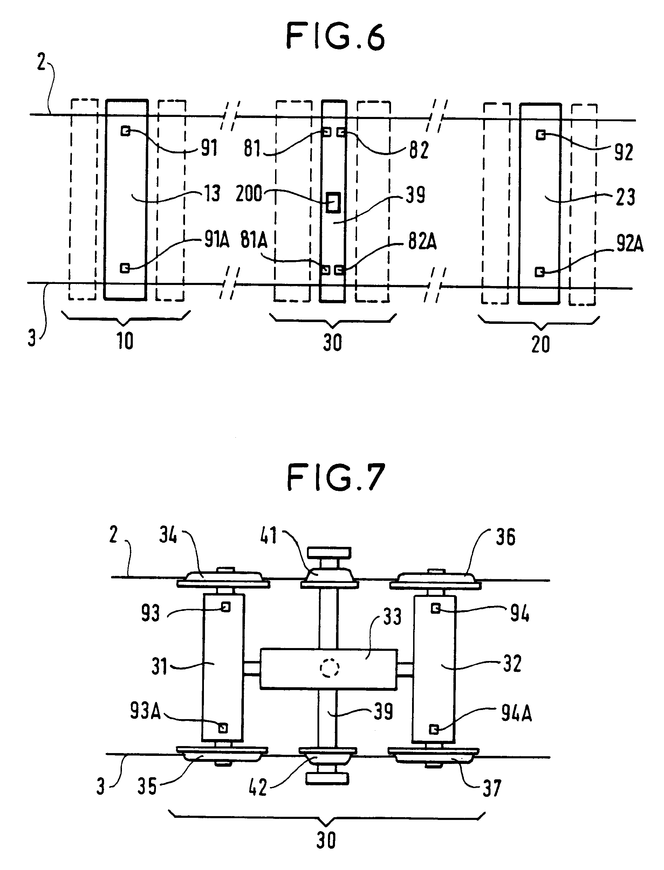

Comme on le voit dans la figure 6, on dispose des écartomètres dont les récepteurs sont placés sur l'essieu supplémentaire 39 du bogie 30 et dont les émetteurs sont placés sur les essieux supplémentaires 13 et 23 des bogies 10 et 20. Plus précisément, pour la mesure des paramètres du rail 2, on utilise une paire d'écartomètres dont les éléments constitutifs sont situés aux extrémités des essieux proches du rail considéré. Dans ce qui suit, on ne décrira que les appareils relatifs à la mesure des paramètres du rail 2, les appareils pour la mesure des paramètres du rail 3, référencés dans la figure 6 avec l'indice A, étant identiques et situés aux autres extrémités des essieux.

Pour la mesure du nivellement et du dressage du rail 2, on utilise deux écartomètres dont les récepteurs 81 et 82 sont disposés tête-bêche à l'extrémité de la traverse 39 proche du rail 2; ces récepteurs reçoivent les faisceaux émis par des émetteurs 91 et 92 respectivement placés sur les traverses 13 et 23, aux extrémités de celles-ci proches du rail 2. Ces éléments sont réglés pour que, sur une voie parfaitement horizontale et rectiligne, les écarts horizontaux et verticaux mesurés aient une valeur de référence.

Les écarts horizontaux et verticaux mesurés par les récepteurs 81 et 82, associés aux mesures effectuées par les proximètres 52, 72 et 62 (figure 3), fournissent, après traitement informatique, une mesure du nivellement et du dressage du rail 2.

En disposant tête-bêche deux systèmes de mesure identiques, et en prenant la différence des mesures obtenues, on élimine les erreurs de mesure dues aux torsions de caisse.

## Mesure des gauches

On utilise le même principe de mesure que précédemment en disposant des paires d'écartomètres sur le bogie central 30.

Dans la figure 7, on a désigné par 93 et 93A les récepteurs de deux écartomètres situés aux extrémités de la traverse d'essieu 31; les émetteurs associés 94 et 94A sont placés aux extrémités de l'essieu 36.

Le réglage est effectué pour une déviation nulle lorsque la voie est parfaitement plane et rectiligne.

Les écarts horizontaux et verticaux mesurés par les récepteurs 93 et 93A fournissent, après traitement informatique, une mesure du gauche de la voie.

## Mesure du dévers

Si on désigne par E l'écartement des rails et par a l'angle que fait, dans une section droite de la voie, une horizontale avec la ligne joignant les deux rails de la voie, la valeur d du dévers est donné par la formule:

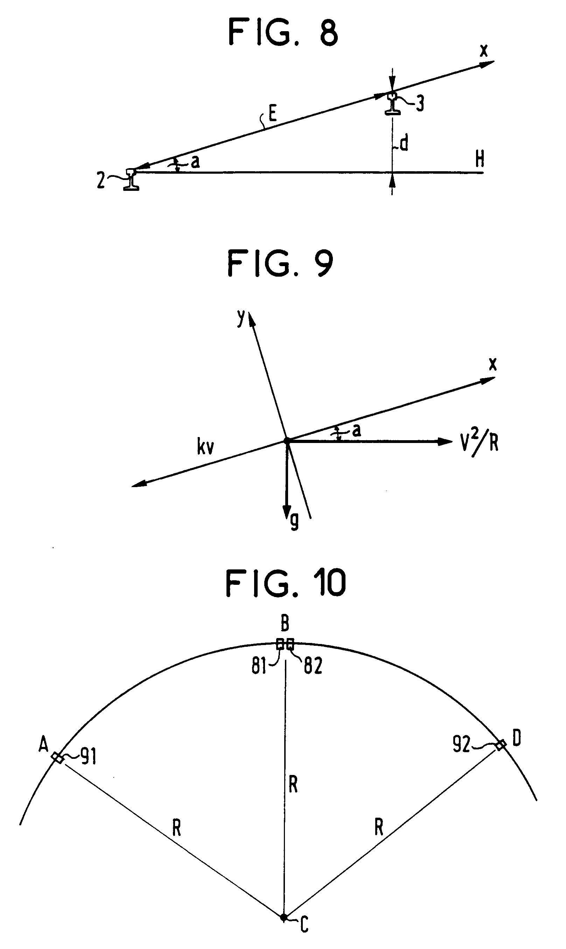

$$d = E \sin a \text{ (Fig. 8)}$$

La valeur de a est obtenu grâce à un inclinomètre embarqué dans le véhicule, et disposé de préférence sur le troisième bogie. Cet inclinomètre est représenté symboliquement dans la figure 6 par le rectangle 200.

Un inclinomètre est un détecteur d'angle référencé à la gravité: une masselotte est supportée par un cadre mobile suspendu à une lame flexible. Si l'appareil est sur un plan horizontal, le support de masselotte est vertical; si l'appareil est incliné, la masselotte tend à se déplacer sous l'action de la gravité. Ce déplacement est détecté par un capteur de proximité électrique et un circuit d'asservissement transforme ce déplacement en un courant proportionnel qui est appliqué au cadre mobile pour ramener la masselotte en position. Un signal kv proportionnel à la tension aux bornes du cadre fournit la mesure de l'angle a. Un tel inclinomètre est bien

4

connu, comme celui commercialisé par la société SCHAEVITZ.

Lorsque le véhicule est en mouvement, la masselotte de l'inclinomètre est soumise, en plus de l'accélération g due à la gravité, à une accélération centrifuge proportionnelle à $V^2/R$, où V désigne la vitesse du véhicule et R le rayon de courbure de la voie.

La vitesse V du véhicule est mesurée par des moyens classiques. On montrera plus loin comment est déterminée la valeur du rayon de courbure R.

La figure 9 représente le diagramme des accélérations subies par la masselotte de l'inclinomètre.

Le bilan des accélérations s'écrit::

$$V^2/R.\cos a - g.\sin a = kv$$

Les solutions de cette équation, élaborées par un calculateur, sont données par la formule:

$$\sin a = (-B \pm \sqrt{A^2 - B^2 + 1})/(1 + A^2)$$

avec $A = V^2/Rg$ et $B = kv/g$

Le choix de la racine se fait en fonction de la valeur algébrique de la flèche de la voie, qui a été calculée par ailleurs (voir plus haut).

La mesure du rayon de courbure se fait par calcul, grâce aux appareils permettant de mesurer le paramètre de voie flèche. La mesure sera effectuée simultanément sur les deux rails de la voie et on retiendra la moyenne des deux mesures.

La figure 10 illustre le principe de cette mesure, mais un seul des deux rails a été représenté par souci de clarté.

On utilise les écartomètres 81, 91 et 82, 92 déjà mentionnés en référence à la figure 6.

Si on désigne par xA, yA les coordonnées de l'émetteur 91, xD, yD les coordonnées de l'émetteur 92, l'origine B des coordonnées étant située à l'endroit des récepteurs placés tête-bêche 81, 82, le rayon de courbure R est donné par la solution du système:

$$(xA - xC)^2 + (yA - yC)^2 = R^2$$
$$(xD - xC)^2 + (yD - yC)^2 = R^2$$
$$xC^2 + yC^2 = R^2$$

où xC et yC désignent les coordonnées du centre C du cercle passant par les points A, B et D.

L'utilisation d'un inclinomètre (200) pour la mesure du dévers permet d'obtenir la précision demandée par les exploitants de réseaux ferrés, grâce à la bonne précision de cet appareil et sa bonne tenue aux chocs.

L'invention, fondée sur l'utilisation d'un bogie supplémentaire et d'essieux supplémentaires à roues indépendantes, ainsi que d'organes de mesure placés directement sur les essieux, permet d'obtenir des résultats de mesure qui ne sont pas perturbés par les mouvements et les déformations de la caisse du véhicule.

On observera que, selon une caractéristique de l'invention, la caisse 1 du véhicule présente une partie centrale 100, délimitée par deux parties 101 et 102 de moindre largeur; la partie 100 est munie de vitrages latéraux 104 et 105 et de vitrages obliques 106, 107 et 108, 109; c'est dans la partie centrale que se tient l'opérateur qui peut ainsi observer les repères extérieurs à la voie (bornes kilométriques par exemple).

Le véhicule présente une symétrie qui permet de l'utiliser dans les deux sens de marche.

## Revendications

1. Véhicule sur rails pour la mesure par voie optique des paramètres géométriques d'une voie comprenant un premier et un deuxième rails, le véhicule se déplaçant sur ladite voie et comprenant un premier (10) et un second (20) bogies ayant chacun deux essieux principaux, caractérisé en ce que chacun des premier et second bogies comprend un troisième essieu (13, 23), à roues indépendantes, le véhicule comprenant en outre:

   - un troisième bogie (30) comportant deux essieux principaux (31, 36) pouvant effectuer l'un par rapport à l'autre des mouvements autour d'un axe passant par leurs centres et un troisième essieu (39), à roues indépendantes, placé entre les deux essieux précités,

   - trois paires (52,53; 62,63; 72,73) de proximètres optiques disposés respectivement sur les trois essieux (13, 23,39) à roues indépendantes, comprenant chacun un émetteur et un récepteur, et placés de manière à viser respectivement les flancs intérieurs des premier (2) et second (3) rails,

   - une première et une deuxième paires d'écartomètres optiques dont les récepteurs (81, 82; 81A, 82A) sont disposés deux à deux tête-bêche aux extrémités de l'essieu central (39) du troisième bogie (30) et dont les émetteurs (91, 92; 91A, 92A) sont disposés respectivement aux extrémités des essieux à roues indépendantes (13, 23) des premier (10) et deuxième (20) bogies,

- une troisième paire d'écartomètres dont les récepteurs (93, 93A) sont placés aux extrémités de l'un (31) des essieux principaux du troisième bogie (30) et dont les émetteurs (94, 94A) sont disposés aux extrémités de l'autre (36) essieu du troisième bogie (30).

2. Véhicule selon la revendication 1, caractérisé en ce que le rayonnement émis par le proximètre (52) solidaire d'un essieu (13) à roues indépendantes pour la mesure de l'écartement de la voie est réfléchi en direction du rail par un miroir (54) solidaire dudit essieu.

3. Véhicule selon la revendication 1, caractérisé en ce que le rayonnement émis par le proximètre (52) solidaire d'un essieu (13) à roues indépendantes pour la mesure de l'écartement de la voie est réfléchi en direction du rail par au moins un miroir (54A) solidaire de la roue (14) dudit essieu.

4. Véhicule selon l'une des revendications 2 et 3, caractérisé en ce que le rayon réfléchi sur le miroir atteint le rail (3) à travers au moins une lumière (56) pratiquée dans le mentonnet (15A) de la roue (15).

5. Véhicule selon l'une des revendications 1 à 4, caractérisé en ce qu'il comporte un inclinomètre (200) fournissant une mesure de l'angle que forme la ligne joignant les deux rails dans une section droite de la voie avec une horizontale, cette mesure étant utilisée pour calculer le paramètre de voie dévers.

6. Véhicule selon l'une des revendications 1 à 5, caractérisé en ce qu'il comprend une partie centrale (100) encadrée par deux parties de moindre largeur (101, 102), lesdites parties étant munies de vitrages (104, 105, 106, 107, 108, 109) pour l'observation des repères extérieurs à la voie.

## Patentansprüche

1. Schienenfahrzeug für die optische Messung der geometrischen Parameter eines Gleises mit einer ersten und einer zweiten Schiene, wobei das Fahrzeug sich auf diesem Gleis bewegt und ein erstes (10) und ein zweites Drehgestell (20) mit je zwei Hauptradachsen besitzt, dadurch gekennzeichnet, daß jedes der Drehgestelle eine dritte Radachse (13, 23) mit unabhängigen Rädern besitzt, wobei das Fahrzeug außerdem aufweist:

- ein drittes Drehgestell (30) mit zwei Hauptradachsen (31, 36), die zueinander Bewegungen um eine durch ihre Zentren verlaufende Achse durchführen können, und mit einer dritten Radachse (39) zwischen den beiden oben erwähnten Radachsen, wobei dieses dritte Radachse unabhängige Räder besitzt,
- drei Paare (52, 53; 62, 63; 72, 73) von optischen Proximetern, die auf den drei Radachsen mit unabhängigen Rädern (13, 23, 39) sitzen und je einen Sender und Empfänger aufweisen, die so angeordnet sind, daß die Innenflanken der beiden Schienen (2, 3) angepeilt werden,
- ein erstes und ein zweites Paar von optischen Abstandsmessern, deren Empfänger (81, 82; 81A, 82A) paarweise einander entgegengerichtet an den Enden der zentralen Radachse (39) des dritten Drehgestells (30) liegen und deren Sender (91, 92; 91A, 92A) an den Enden der Radachsen (13, 23) mit unabhängigen Rädern des ersten (10) und des zweiten Drehgestells (20) liegen,
- ein drittes Paar von Abstandsmessern, deren Empfänger (93, 93A) an den Enden einer der Hauptradachsen (31) des dritten Drehgestells (30) und deren Sender (94, 94A) an den Enden der anderen Radachse (36) des dritten Drehgestells (30) liegen.

2. Fahrzeug nach Anspruch 1, dadurch gekennzeichnet, daß die von dem mit einer Radachse (13) mit unabhängigen Rädern fest verbundenen Proximeter (52) ausgesandte Strahlung für die Messung des Schienenabstands in Richtung auf die Schiene von einem mit dieser Radachse fest verbundenen Spiegel (54) reflektiert wird.

3. Fahrzeug nach Anspruch 1, dadurch gekennzeichnet, daß die von dem mit einer Radachse (13) mit unabhängigen Rädern fest verbundenen Proximeter (52) ausgesandte Strahlung für die Messung des Schienenabstands in Richtung auf die Schiene von mindestens einem mit dem Rad (14) dieser Radachse fest verbundenen Spiegel (54A) reflektiert wird.

4. Fahrzeug nach einem der Ansprüche 2 und 3, dadurch gekennzeichnet, daß der vom Spiegel reflektierte Strahl auf die Schiene (3) nach Durchgang durch mindestens ein Fenster (56) auftrifft, das in der Wange (15A) des Rades (15) vorgesehen ist.

5. Fahrzeug nach einem der Ansprüche 1 bis 4, dadurch gekennzeichnet, daß es einen Neigungsmesser (200) besitzt, der einen Meßwert des Winkels liefert, den die die beiden Schienen in einem Querschnitt durch das Gleis verbindende Gerade mit einer horizontalen Geraden einschließt, wobei diese Messung zur Berechnung des Gleisparameters "Verwerfung" verwendet wird.

6. Fahrzeug nach einem der Ansprüche 1 bis 5, dadurch gekennzeichnet, daß es einen zentralen Bereich (100) besitzt, der von zwei Bereichen geringerer Breite (101, 102) begrenzt wird, wobei diese Bereiche mit Verglasungen (104, 105, 106, 107, 108, 109) zur Beobachtung der äußeren Gleismarkierungen versehen sind.

## Claims

1. A railroad vehicle for measuring by optical means the geometrical parameters of a track comprising a first rail and a second rail, the vehicle moving on said track and including a first bogie (10) and a second bogie (20) each of which has two main axles, said vehicle being characterized in that each of the first and second bogies includes a third axle (13, 23) with independent wheels, the vehicle also including:

   a third bogie (30) comprising two main axles (31 & 36), capable of moving relative to each other about an axis passing through their centers, and a third axle (39) with independent wheels, placed between the two said axles;

   three pairs (52 & 53; 62 & 63; 72 & 73) of optical proximity meters disposed on respective ones of the three independent-wheel axles (13, 23 & 29), each proximity meter including an emitter and a receiver placed so as to look at the inside faces of the first rail (2) and the second rail (3) respectively;

   first and second pairs of optical distance gauges whose receivers (81 & 82; 81A & 82A) are disposed head-to-tail in pairs at the ends of the central axle (39) of the third bogie (30) and whose emitters (91 & 92; 91A & 92A) are disposed at the ends of the independent-wheel axles (13 & 23) respectively of the first (10) and second (20) bogies; and

   a third pair of distance gauges whose receivers (93 & 93A) are placed at the ends of one (31) of the main axles of the third bogie (30) and whose emitters (94 & 94A) are disposed at the ends of the other (36) axle of the third bogie (30).

2. A vehicle according to claim 1, characterized in that the ray emitted by the proximity meter (52) secured to an independent-wheel axle (13) for measuring the gauge of the track is reflected towards the rail by a mirror (54) secured to said axle.

3. A vehicle according to claim 1, characterized in that the ray emitted by the proximity meter (52) secured to an independent-wheel axle (13) for measuring the gauge of the track is reflected towards the rail by at least one mirror (54A) secured to the wheel (14) of said axle.

4. A vehicle according to claim 2 or 3, characterized in that the ray reflected on the mirror reaches the rail through a hole (56) made in the flange (15A) of the wheel (15).

5. A vehicle according to any one of claims 1 to 4, characterized in that it includes a tilt indicator (200) providing a measurement of the angle formed in a cross section of the track between the horizontal and the line joining the two rails, this measurement being used to calculate the cant parameter of the track.

6. A vehicle according to any one of claims 1 to 5, characterized in that it includes a central portion (100) bordered by two narrower portions (101 & 102), said portions being provided with windows (104, 105, 106, 107, 108 & 109) for observing markers outside the track.

FIG.1

FIG.2

8

FIG.3

# FIG. 4

# FIG.5

# FIG.6

2

91 81 82 92

13 200 39 23

91A 81A 82A 92A

3

10 30 20

# FIG.7

2 34 41 36

93 33 94

31 32

93A 39 94A

3 35 42 37

30

# FIG. 8

# FIG. 9

# FIG. 10